# EUROPÄISCHE PATENTANMELDUNG

(11) **EP 0 890 430 A2**
(43) Veröffentlichungstag der Anmeldung: **13.01.1999**
(21) Anmeldenummer: 98112838.2
(22) Anmeldetag: 10.07.1998
(51) Int. Cl.: B32B 5/26

(54) **Schnittfester Verbund für Polsterungsmaterialien im Personennahverkehr**

(30) Priorität: 11.07.1997 DE 19729783
(71) Anmelder: Hoechst Trevira GmbH & Co. KG, 60528 Frankfurt am Main (DE)
(72) Erfinder: Klis, Gerhard, 65510 Idstein (DE); Sohn, Achim, Dipl.-Ing., 86399 Bobingen (DE); Rickerl, Christoph, 40223 Düsseldorf (DE)
(74) Vertreter: Luderschmidt, Schüler & Partner GbR

(57) **Zusammenfassung**

Die Erfindung betrifft einen schnittfesten Verbund für Polsterungsmaterialien (1) aus mindestens einer Lage oder Schicht, dadurch gekennzeichnet, daß der Verbund frei von Metall ist und zu mindestens 80 Gew.-%, bezogen auf den Verbund, vorzugsweise zu mind. 95 Gew.-%, aus Polyesterfasern besteht.

Ferner ist ein Polsterungsmaterial beschrieben, welches eine Dekorschicht (2) aufweist, die mit dem erfindungsgemäßen Verbund verbunden ist. Die Erfindung betrifft weiterhin ein Verfahren zur Herstellung eines Posterungsmaterials.

## Beschreibung

Die Erfindung betrifft einen schnittfesten Verbund für Polsterungsmaterialien, ein Polsterungsmaterial, einen Personensitz oder -sitzbank, sowie ein Verfahren zur Herstellung eines Posterungsmaterials, sowie die Verwendung des Polstermaterials.

In öffentlichen Verkehrsmitteln, wie z.B. S-Bahnen, U-Bahnen, Bussen oder Nahverkehrszügen werden die Bezugsstoffe und Polstermaterialien, welche aus gründen der Optik und Bequemlichkeit auf den darin befindlichen Sitzgestellen aufgebracht sind, in zunehmenden Maße durch Vandalismus zerstört. Häufig werden die Sitzbezüge und -polster durch spitze Gegenstände wie Messer aufgeschnitten, so daß diese beschädigt oder zerstört werden. Insbesondere der sogenannte "Wundaufklaffeffekt" wird als störend empfunden. Die Kosten für eine Reparatur oder Erneuerung der Sitze sind beträchtlich. Es besteht daher ein Bedarf an schnittfesten Polster- und Dekormaterialien für Sitze.

Es sind bereits schnittfeste Sitzsysteme bekannt, die entweder gepolstert oder ungepolstert sein können. Gepolsterte Sitze können beispielsweise einen Dekorstoff bzw. Oberstoff und eine darunter befindliche, die Schnittfestigkeit erhöhende, Flächenkonstruktion aufweisen, wobei der Dekorstoff mit dieser Schnittschutzlage verklebt ist. Einen vergleichsweise harten Einsatz für Sitze beschreibt die US-A-5,061,539. Der Sitzeinsatz besteht aus einer harten Unterlage aus einem Polyesterharz, glasfaserverstärktem Kunststoff oder Stahl und einer äußeren Dekorschicht aus einem Synthesefaserflor mit im wesentlich vertikal angeordneten Fasern. Die beschriebene Konstruktion weist keine schnittfeste Polsterungslage auf.

Aus Magyar Textiltechnika, 1996, special issue, Textile Technologies-Material Testing, Seiten 6-9, sind schnittfeste Sitzbezüge für den Einsatz in S-Bahnen und U-Bahnen bekannt.
Wie dort beschrieben, kann die Schnittfestigkeit des Bezugs erhöht werden, durch eine Polsterungslage aus einem geschäumten Material, in welches ein Drahtgestrick eingebettet ist. Polsterungslagen, die Metalldrähte oder Metallfasern enthalten, sind allederdings wegen der erhöhten Verletzungsgefahr, die von herausstehenden Drähte ausgeht, und aufgrund ihrer geringen Verformbarkeit und des relativ hohen Gewichts nicht von Vorteil. Ein metallfreier Sitzbezug mit erhöhter Schnittfestigkeit kann gemäß der Publikation so aufgebaut sein, daß eine untere Posterungslage aus einem aromatischen Polyamidgarn-Gewebe besteht und auf die Polsterungslage ein Dekorstoff aus einem Wolle- oder Polyester-Gewebe aufgebracht ist. Derartige Sitzbezüge sind hinsichtlich des Brandschutzes aufgrund des hohen Anteils aromatischer Polyamide nicht von Vorteil, da diese Fasern bei einem Brand gesundheitsschädliche Gase entwickeln.

In der EP-A 675 220 wird eine Vandalismus-Schutzschicht mit flammhemmenden Eigenschaften beschrieben, die gleichzeitig eine Polsterung und einen Schnittschutz bewirkt. Die beschriebene Schicht besteht aus einer Maschenware aus Polyamidfasern, Glasfassern oder nach dem Gelspinnverfahren ersponnen Polyethylenfasern, welche gemäß der Druckschrift allerdings in Bezug auf die geringe Brennbarkeit nicht vorteilhaft sind, und einem zusätzlich darin enthaltenen Draht aus Metall.
Eine ähnliche Vandalismus-Schutzschicht offenbart die DE-44 38 013. Die Schichten bestehen ebenfalls aus einer Maschenware aus aromatischen Polyamidfasern, die zusätzlich in mindestens einem Fadensystem einen Metalldraht enthält.
Die bereits weiter oben erwähnte Verletzungsgefahr aufgund der in den vorstehend beschrieben Schutzschichten enthaltenen Metalldrähte besteht ebenfalls.

Aufgabe der vorliegenden Erfindung ist es, einen metallfreien, schnittfesten, rein textilen Verbundstoff zu entwickeln, der eine hohe Schnittfestigkeit aufweist und auf einfache Weise und kostengünstig hergestellt werden kann. Diese Anforderungen müssen im Einklang mit bestehenden Auflagen für den Brandschutz stehen. Ferner muß das Material möglichst einfach recyclisierbar sein.

Der schnittfeste Verbund für Polsterungsmaterialien gemäß der Erfindung besteht aus mindestens einer Lage oder Schicht und ist dadurch gekennzeichnet, daß der Verbund frei von Metall ist und zu mindestens 80 Gew.-%, bezogen auf den Verbund, vorzugsweise zu mind. 95 Gew.-%, aus Polyesterfasern bestehen.

Unter dem Begriff Verbund wird gemäß der vorliegenden Erfindung ein Polsterungsmaterial verstanden, auf den noch keine Dekorschicht, wie beispielsweise ein Bezugsstoff, aufgebracht ist. Aus dem schnittfesten Verbund gemäß der Erfindung entsteht erst dann ein schnittfestes Polsterungsmaterial, wenn darauf eine Dekorschicht aufgebracht wird.

Der Begriff Fasern, wie er in der vorliegenden Erfindung verwendet wird, ist in seiner breitest denkbaren Bedeutung zu verstehen. Unter diesen Begriff fallen alle gebräuchlichen Fasertypen, wie beispielsweise Stapelfasern, Endlosfilamente, Monofilamente und auch Kern-Mantelfasern.

Eine Verbund ist im Sinne der Erfindung als schnittfest anzusehen, wenn er die an ihn gestellten öffentlichen Auflagen bezüglich Schnittfestigkeit, die im öffentlichen Nahverkehr üblich sind, erfüllt. Ein Verbund ist insbesondere dann als schnittfest anzusehen, wenn das aus dem Verbund hergestellte Polsterungsmaterial nach einem Schnitt und/oder Stich, der auf das Polsterungsmaterial eingewirkt hat, nicht wesentlich in seiner Gebrauchsfähigkeit beeinträchtigt worden ist.

Der erfindungsgemäße Verbund ist auch ohne zusätzlich vorhandene Fasern oder Drähten aus Metall ausreichend schnittfest. Der Verbund enthält daher keine Fasern oder Drähte aus Metall. Vorzugsweise kann der erfindungsgemäße Verbund auch so hergestellt werden daß praktisch vollständig auf den Einsatz von lösungsmittelgesponnen Fasern verzichtet werden kann.

Die in dem Verbund enthaltenen Fasern sind zu einem Anteil von mindestens 80 Gew.-% Fasern aus Polyester. Besonders bevorzugt ist ein Anteil von mindestens 95 Gew.-%, insbesondere 98 Gew.-%, bezogen auf die im Verbund vorhandene Faserkomponente. Es ist möglich, daß neben den Polyesterfasern noch geringe Mengen anderer Fasertypen im Verbund vorhanden sind. Beispiele für solche Fasern sind anorganische Fasern, wie Glasfasern oder Kohlenstoffasern, oder organische Fasern, wie Polyolefinfasern, Fasern aus aliphatischen oder aromatischen Polyamiden oder synthetische Bikomponentenfasern.

Die Polyesterfasern, die im Verbund vorhanden sind, können Einkomponentfasern aus Polyesterrohstoffen oder Mehrkomponentenfasern aus verschiedenen Polyesterrohstoffen sein, wie etwa Bikomponentenfasern mit einem bei höher Temperatur schmelzenden Polyester im Kern und einem niedriger schmelzenden Polyester im Mantel. Vorzugsweise sind die Polyesterfasern aus einem Polyesterrohstoff hergestellt.

Besonders bevorzugt werden im Verbund ausschließlich Polyesterfasern aus mofifiziertem oder unmodifiziertem Polyethylenterephthalat eingesetzt. Ganz besonders bevorzugt sind dies flammhemmend modifizierte Polyethylenterephthalatfasern, wie beispielsweise Fasern aus ®TREVIRA CS (Fa. Hoechst Trevira).

Neben dem Rohstoff Polyester können im Verbund beispielsweise in Form von Fasern, Klebern oder Füllstoffen noch geringe Mengen von Rohstoffen vorhanden sein, die keine Polyester sind. Beispiele für mögliche Rohstoffe sind Kunststoffe auf Basis von Polyolefin, Polyamid, Polyethylen oder Polypropylen. Vorzugsweise sind jedoch neben dem Rohstoff Polyester keine weiteren Rohstoffe im Verbund vorhanden.

Der Verbund enthält mindestens eine Lage oder Schicht, die im wesentlichen aus Fasern hergestellt ist. Enthält der Verbund mehrere solcher textilen Lagen oder Schichten, was bevorzugt ist, können die Lagen zumindest teilweise miteinander verbunden sein. Vorzugsweise sind alle Lagen miteinander verbunden, wobei die einzelnen Lagen miteinander verklebt sein können oder auch klebemittelfrei durch vernähen oder vernadeln mechanisch miteinander verbunden sein können. Die angegebene Schichtenanzahl bezieht sich in der vorliegenden Erfindung auf die Anzahl der Lagen, die im Verbund enthalten sind, wobei die ggf. in der Dekorschicht vorhandenen Lagen nicht mitgezählt werden. Vorzugsweise weist der Verbund einen 2 bis 6 lagigen Aufbau auf. Die Anzahl der Schichten kann im Bereich der vorliegenden Erfindung variiert werden und ermöglicht dem Fachmann eine Anpassung des Sitzkomforts an die gewünschten Anforderungen.

Die Lagen können als solche schnittverhindernd oder -hemmend sein oder aber auch nur zur Verbesserung des Komforts vorhanden sein. Es kommt lediglich darauf an, daß der Verbund mindestens eine im Sinne der Erfindung schnittverhindernde oder schnitthemmende Schicht enthält. Ein besonders guter Schnittschutz wird insbesondere dann erhalten, wenn die Lagen, die Lagenfolge und die zur Verbindung der Lagen eingesetzte Technik genau aufeinander abgestimmt ist.

Beispiele für geeignete Lagen sind textile Flächengebilde wie Gewebe, Gelege, Gewirke, Gestricke, Wirrfaservliese oder Spiraltücher. Handelt es sich bei den textilen Flächengebilden um Gewebe, Gewirke, Gestricke oder Vliese, können die zur Herstellung der Flächengebilde eingesetzten Garne aus Endlosfasern oder aus Spinnfasern hergestellt sein. Bei Spiraltüchern handelt es sich um einzelne Wendeln aus Monofilamenten, die mit Hilfe von geraden Monofilamenten (Streckdrähte) miteinander verbunden sind.

In einer bevorzugten Ausführungsform ist mindestens eine der Lagen ein sogenanntes dreidimensionales textiles Flächengebilde. Dreidimensionale textile Flächengebilde sind Abstands -gewebe, -gewirke, oder -gestricke, wie sie beispielsweise in der EP-A 0 697 478 oder der EP-A 0 617 152 beschrieben sind, und werden unter anderem als Polsterungslagen in Sitzen eingesetzt. Die erfindungsgemäß einsetzbaren dreidimensionalen Flächengebilde bestehen aus einer oberen und unteren Textillage, wobei die Textillagen von zwischen den Lagen befindlichen Monofilamenten (Polfäden) in einem definierten Abstand gehalten werden. Ein in dieser Weise aufgebautes dreidimensionales Flächengebilde zeichnet sich durch eine elastische Komprimierbarkeit senkrecht zur Fläche aus. Die zwischen den Lagen befindlichen Monofilamente weisen Durchmesser von vorzugsweise zwischen 0,02 und 0,80 mm, insbesondere 0,055 bis 0,5 mm, auf.

Als obere und untere Textillage im dreidimensionalen Flächengebilde lassen sich beispielsweise Gewirke, Gewebe oder Gelege einsetzen, die aus Monofilen, Multifilamentgarnen oder Stapelfasergarnen hergestellt sein können. Vorzugsweise handelt es sich bei der oberen und unteren Gewebelage um ein Gewirke.

Die Eigenschaften des dreidimensionalen textilen Flächengebildes werden im wesentlichen von der Füllstruktur, daß heißt von der Anordnung und Art der Garne oder Monofile, die zwischen der oberen und unteren das dreidimensionale Flächengebilde begrenzenden Lage angeordnet sind, bestimmt und können beispielsweise durch Variation des Flächengewichtes, Bindungsart, Winkel der Monofilamente parallel zur Maschinenrichtung und senkrecht zur Maschinenrichtung, Abstand der oberen und unteren Gewebebahn und Art und Titer der Monofile bzw. Multifilamente an die an das dreidimensionale Flächengebilde gestellten Anforderungen angepaßt werden.

Bevorzugt wird als dreidimensionales Flächengebilde ein Abstandsgewirke eingesetzt. In einem Abstandsgewirke werden eine obere und eine untere Gewirkebahn durch Monofile miteinander verbunden.

Der Abstand der im dreidimensionalen textilen Flächengebilde enthaltenen oberen und unteren Gewebebahn beträgt vorzugsweise 0,5 bis 70 mm, besonderes bevorzugt 1,5 bis 20 mm. Ganz besonders bevorzugt ist ein Abstand im Bereich von 4 bis 15 mm, insbesondere 6 bis 12 mm. Vorzugsweise handelt es sich bei den oberen und unteren Gewebebahnen um Gewirke.

Das Flächengewicht der dreidimensionalen textilen Flächengebilde liegt vorzugsweise in einem Bereich von 100 bis 4000 g/mm², vorzugsweise 400 bis 1500 g/mm².

In einer weiteren bevorzugten Ausführungsform enthält der erfindungsgemäße Verbund als eine schnittverhindernde oder schnitthemmende Schicht ein Spiraltuch. Ein Spiraltuch besteht aus einzelnen ineinanderliegenden spiralförmig gewickelten Monofilamenten mit einem Durchmesser von vorzugsweise 0,4 bis 1,2 mm, die durch monofile Steckfäden miteinander Verbunden sind. Grundsätzlich können alle im Stand der Technik bekannten Spiraltücher eingesetzt werden, sofern die zur Herstellung des Spiraltuchs verwendeten Monofilamente bzw. Multifilamente die jeweils gestellten Anforderungen bezüglich Sortenreinheit und Schwerentflammbarkeit erfüllen. Erfindungsgemäß einsetzbare Spiraltücher sind beispielsweise in "Wochenblatt für Papierfabrikation", 17, S. 613-618, 1983 und der US 4,395,308 beschrieben.

Das Spiraltuch weist vorzugsweise ein Flächengewicht von 500 bis 1500 g/m² auf.

Die Dicke des Spiraltuchs beträgt vorzugsweise 1,0 bis 4 mm, insbesondere 1,5 bis 2,5 mm.

Die im Spiraltuch verbundenen Spiralen haben einen Abstand von vorzugsweise 3 bis 25 mm zueinander.

Für den Fall, daß im erfindungsgemäßen Verbund eine Lage eines dreidimensionalen textilen Flächengebildes enthalten ist, so befindet sich daß Spiraltuch vorzugsweise oberhalb des dreidimensionalen Flächengebildes.

In dem erfindungsgemäßen Verbund sind vorzugsweise ein oder mehrere Wirrfaservliese enthalten. Ein Wirrfaservlies, welches mit einem Spiraltuch oder einem Abstandsgewirke verbunden wird, kann die Schnittfestigkeit des Verbunds zusätzlich verbessern. Beispiele für erfindungsgemäß einsetzbare Vliese sind Endlosfaservliese, oder Vliese aus Stapelfasergarnen. Vorzugsweise werden Vliese aus Stapelfasern eingesetzt, wobei die Länge der Stapelfasern vorzugsweise zwischen 30 und 90 mm liegt.

Das Flächengewicht des Wirrfaservlieses beträgt vorzugsweise 100 bis 800 g/m², vorzugsweise 200 bis 400 g/m², bei einem Titer der Fasern von vorzugsweise 3 bis 40, insbesondere 8-20 dtex.

Das Wirrfaservlies wird vorzugsweise in einer Dicke von etwa 0,5 bis 3 mm eingesetzt.

In dem erfindungsgemäßen Verbund sind vorzugsweise eine oder mehrere Lagen eines elastischen Flächengebildes, wie elastische Gewebe, Gewirke oder Gestricke, enthalten. Die einsetzbaren elastischen Flächengebilde können beispielsweise ganz oder teilweise aus elastischen synthetischen Garnen durch Weben, Wirken oder Stricken hergestellt sein. Vorzugsweise werden die elastischen Flächengebilde durch Wirken, beispielsweise auf Kettenwirk- oder Raschelmaschinen, hergestellt. Durch die Wahl der Bindungsart, wie etwa Trikot-Franse-Legung oder Franse mit Durchschuß-Legung, kann der Fachmann, je nach den gewünschten Anforderungen, eine mulitdirektionale oder auch unidirektionale Elastizität im textilen Flächengebilde hervorufen.

Vorzugsweise bestehen die im elastischen Flächengebile enthaltenen elastischen Garne aus Block-Polymeren auf Polyether-ester-Basis. Diese Garne werden unter dem Namen ®ELAS-TER (Hoechst Celanese Corp., USA) im Handel angeboten. Gemäß der Erfindung werden die elastischen synthetischen Garne vorzugsweise in Form von Multifilamenten zu den elastischen Flächengebilden verarbeitet. Derartige elastische Flächengebilde sind unter dem Namen ®GEMSTONE (Milliken, USA) erhältlich.

Die Dicke des elastischen Flächengebildes beträgt vorzugsweise 0,1 bis 4 mm, insbesondere 0,3 bis 1 mm.

Das Flächengewicht des elastischen Flächengebildes liegt vorzugsweise in einem Bereich von 200 bis 500 g/mm².

Als eine untere Lage kann, falls vom Verarbeiter gewünscht, eine weitere zusätzliche Vliesschicht oder Filzschicht für beispielsweise optische Zwecke auf den Verbund aufgebracht werden. Vorzugsweise müssen die darin enthaltenen Fasern entsprechend den Angaben bei den weiter oben beschriebenen Lagen ausgewählt werden, damit die an den Verbund gestellten Anforderungen bezüglich Brandschutz und Recycling erfüllt werden.

Der in dem Verbund enthaltene Polyesterrohstoff besteht vorzugsweise zu mindestens 60 Gew.-%, bezogen auf den gesamten im Verbund vorhandenen Polyester, aus flammhemmend modifizierten Polyestern. Geeignete Modifizierungskomponenten, die in den Polyester einkondensiert werden, sind beispielsweise in der DE-PS 23 46 787 oder der EP-A-0 773 313 beschrieben. Besonders bevorzugt ist es, daß alle im Verbund vorhandenen Polyesterrohstoffe flammhemmend modifiziert sind. Besonders bevorzugt handelt es sich bei den eingesetzten Polyesterrohstoffen um modifiziertes oder unmodifiziertes Polyethylenterephthalat, insbesondere flammhemmend modifiziertes Polyethylenterephthalat, wie beispielsweise ®TREVIRA CS (Hoechst Trevira).

Der flammhemmend modifizierte Polyester, der gemäß der vorliegenden Erfindung eingesetzt wird, ist vorzugsweise ein Copolyester auf Basis von Dicarbonsäuren und Diolkomponenten, der eine bifunktionelle Phosphorverbindung in vorzugsweise einer Menge von 0,1 bis 20 Gew.-%, insbesondere 0,2 bis 0,8 Gew.-%, bezogen auf die Mengen an Phosphor, in der Polymerkette einkondensiert enthält.

Die in den Polyesterketten einkondensierten Kettenglieder sind vorzugsweise solche der allgemeinen Formel 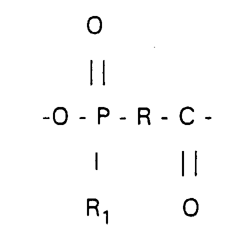 besteht, wobei R einen gesättigten offenkettigen oder zyklischen Akylen-, einen Arylen- oder einen Aralkylen- rest und R₁ einen Alkyrest mit bis zu 6 C-Atomen, einen Aryl- oder Aralkylrest bedeuten.

Sind im erfindungsgemäßen Verbund mindestens zwei Lagen vorhanden, so werden diese entweder adhesiv, beispielsweise mit einem flüssigen Kleber und/oder einem Kleber der in Form eines Pulvers vorliegt, oder mechanisch, beispielsweise durch Vernadeln oder Vernähen, miteinander Verbunden.

Vorzugsweise werden die Lagen mechanisch miteinander verbunden.

Erfolgt die Verbindung einzelner Lagen durch Vernadeln, so sind solche Verbunde bevorzugt, die zumindest eine zusätzliche Wirrfaservliesschicht, wie beispielsweise ein Stapelfaservlies, enthalten. Die Vliesschicht kann entweder zwischen den zu vernadelnden Schichten angeordnet sein, aber auch oberhalb oder unterhalb der zu vernadelnden Schichten. Besonders bevorzugt sind Verbunde die eine Vliesschicht aufweisen, die sich oberhalb der zu vernadelnden Schichten befindet. Besteht der Verbund beispielsweise aus einem oberhalb in Richtung der Sitzfläche befindlichen Spiraltuch und einem unterhalb angeordneten Abstandsgewirke, so läßt sich das Spiraltuch mit dem Abstandsgewirke besonders gut vernadeln, wenn oberhalb des Spiraltuchs eine Stapelfaservliesschicht aufgebracht ist. Es ist aber auch möglich, daß sich zwischen den durch Vernadeln zu verbindenden Lagen eine Vliesschicht befindet. Ganz besonders bevorzugt ist es daher, wenn sich zusätzlich zu der äußeren Vliesschichtlage auch eine Vlieslage zwischen den zu vernadelnden Lagen befindet.

Die Vernadelung der zu verbindenden Lagen kann von oben, von unten oder auch beidseitig erfolgen. Dabei ist es bevorzugt, daß eine zusätzliche zur Vernadelung vorhandene äußere Vliesschicht sich auf der Seite befindet, auf der die Nadeln bei der Vernadelung in die zu vernadelnden Schichten eindringen, so daß die durch die Nadeln aus dem Vlies mitgenommenen Fasern in Richtung der eindringenden Nadeln in die zu verbindenden Schichten eindringen, miteinander verhaken und somit eine Verfestigung bewirken können.

In einer weiteren bevorzugten Ausführungsform werden zumindest einige der im erfindungsgemäßen Verbund vorhandenen übereinanderliegende Lagen nicht mechanisch, sondern adhesiv, durch Kleben, miteinander verbunden. Es ist insbesondere ebenfalls möglich, daß alle Schichten im Verbund miteinander verklebt werden. Vorzugsweise werden als Klebstoffe an sich bekannte thermoplastische oder vernetzende synthetische Harze eingesetzt.

Vorzugsweise werden als Kleber sortenreine und somit recyclisierbare Kleber eingesetzt. Besonders bevorzugt sind sortenreine Kleber auf Basis von Polyestern, inbesondere Kleber, die zu 10-70 Gew.-% einen in Wasser löslichen oder dispergierbaren Polyester und 90-30 Gew.-% einen in Wasser unlöslichen Polyester enthalten. Dabei beziehen sich die Gew.-% Angaben auf die Gesamtmenge des Klebers.
Ein Beispiel für einen erfindungsgemäß einsetzbaren recyclisierbaren Kleber auf Polyesterbasis, sowie ein Verfahren zur Herstellung dieses Klebers ist in der EP-A-0 599 101 beschrieben.

Die Kleber können vorzugsweise flammhemmend modifiziert sein oder flammhemmende Zusätze enthalten.

Der Gewichtsanteil des Klebers liegt vorzugsweise unterhalb von 20 Gew.-%, insbesondere unterhalb 5 Gew.-%, bezogen auf alle im Verbund vorhandenen Lagen.

Im erfindungsgemäßen Verbund können neben Fasern auch geringe Mengen weiterer Komponenten, wie beispielsweise organische Füllstoffe vorhanden sein. Vorzugsweise bestehen diese Füllstoffe zu mindestens 95 Gew.-%, bezogen auf das Gesamtgewicht des Verbundes, aus flammhemmend modifiziertem Polyester.

Das Aufbringen des Klebers auf die Lagen kann auf an sich bekannte Weise erfolgen. Beispiele für mögliche Auftragungsarten sind in der EP-A 0 599 101 beschrieben.

Das Flächengewicht des Verbunds gemäß der Erfindung liegt in einem Bereich von 500 bis 5000 g/m², vorzugsweise 1500 bis 3500 g/m².

Die Dicke des Verbunds liegt vorzugsweise in einem Bereich von 5 bis 80 mm, insbesondere 10 bis 50 mm.

Es ist in einer weiteren bevorzugten Ausführungsform möglich, daß in das Spiraltuch zusätzliche Füllfäden eingearbeitet werden. Diese Variante empfiehlt sich dann, wenn auf eine besonders hohe Schnittfestigkeit Wert gelegt wird. Geeignete Füllfäden sind vorzugsweise Polyester-Monofilamente mit einem Titer im Bereich von 500 bis 5000 dtex.

Die Dekorschicht, die auf den erfindungsgemäßen Verbund aufgebracht werden kann, ist beispielsweise ein Gewebe oder eine Maschenware aus Wolle oder Synthesefasern. Bevorzugte Derkorschichten sind Gewebe aus modifizierten oder unmodifizierten Polyesterfasern. Besonders bevorzugt werden flammhemmend modifizierte Polyethylenterepthalatfasern, wie beispielsweise solche aus ®TREVIRA CS (Hoechst Trevira) eingesetzt.

Der erfindungsgemäße Verbund läßt sich in Sitzen für Automobile, Schienen- und Straßenfahrzeuge für den Personentransport oder Flugzeuge verwenden.

Ein weiterer Gegenstand der Erfindung ist ein Polsterungsmaterial, welches eine Dekorschicht aufweist, die mit dem Verbund gemäß der Erfindung verbunden ist.

Die Herstellung eines Posterungsmaterials ist ebenfalls ein Gegenstand der Erfindung. Gemäß der Erfindung läßt sich ein Polstermaterial herstellen, indem auf den erfindungsgemäßen Verbund mit Hilfe von an sich bekannten Maßnahmen eine Dekorschicht durch verkleben, verschweißen, vernähen oder vernadeln aufgebracht wird.

Die aus den Verbunden gemäß der Erfindung hergestellten Polsterungsmaterial weisen gegenüber bekannten Polsterungsmaterialien eine besonders gute Wasserdampfdurchlässigkeit und Luftdurchlässigkeit auf. Zusätzlich wird durch die erfindungsgemäße Konstruktion der Wassertransport durch den Verbund gefördert.

Weiterhin zeichnen sich die erfindungsgemäßen Posterungsmaterialien durch eine hohe Schnitt- und Stichfestigkeit bei gleichzeitig hohem Maße an Komfort und textiltypischen Charakter aus.

Die erfindungsgemäßen Polsterungsmaterialien sind schwer entflammbar und entwickeln im Falle eines Brandes keine entzündlichen Gase. Ferner können die Polsterungsmaterialien hinsichtlich deren Dicke und Flächengewicht so hergestellt werden, daß sie bei einer hohen mechanischen Belastbarkeit ein geringes Gewicht aufweisen.

### Beispiel

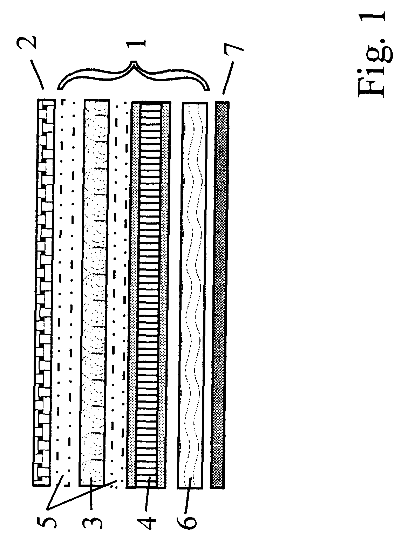

Figur 1 zeigt ein Beispiel für ein Polsterungsmaterial gemäß der Erfindung. Auf den erfindungsgemäßen Verbund (1), welcher fünflagig aufgebaut ist, befindet sich ein aufkaschierter Oberstoff (2). Unterhalb des Verbunds ist ein zusätzliches Vlies (7) aufgebracht.
Der Verbund besteht aus einem Spiraltuch (3), einer Lage eines Abstandgewirkes (4), einem ®GEMSTONE-Flächengebilde (6) und zwei Lagen eines Stapelfaservlieses (5). Die im Verbund befindlichen Lagen wurden miteinander auf an sich bekannte Weise mit einer Nadelmaschine der Fa. Dilo vernadelt.

### Herstellungsdaten:

| Spiraltuch | |
|---|---|
| Dicke: | 2 mm |
| Flächengewicht: | 1000 g/m² |

| Abstandgewirke | |
|---|---|
| Dicke: | 10 mm |
| Flächengewicht: | 653 g/m² |
| Fasern in oberer | Polyethylenterephthalat (PET)- |
| und unterer Lage: | Stapelfasern, Stärke 167 dtex |
| Fasern in der Füllstruktur: | Monofile, Stärke 0,25 mm |

| Elastische Lage | |
|---|---|
| Dicke: | 0,5 mm |
| Flächengewicht: | 265 g/m² |

| Vlies | |
|---|---|
| Dicke: | 1 mm |
| Flächengewicht: | 300 g/m² |

## Patentansprüche

1. Schnittfester Verbund für Polsterungsmaterialien (1) aus mindestens einer Lage oder Schicht, dadurch gekennzeichnet, daß der Verbund frei von Metall ist und zu mindestens 80 Gew.-%, bezogen auf den Verbund, vorzugsweise zu mind. 95 Gew.-%, aus Polyesterfasern besteht.

2. Schnittfester Verbund nach Anspruch 1, dadurch gekennzeichnet, daß ein oder mehrere dreidimensionale textile Flächengebilde, wie beispielsweise Abstands -gewebe, -gewirke oder -gestricke (4), enthalten sind.

3. Schnittfester Verbund nach einem der Ansprüche 1 und 2, dadurch gekennzeichnet, daß als eine schnittverhindernde oder schnitthemmende Schicht ein Spiraltuch (3) enthalten ist.

4. Schnittfester Verbund nach mindestens einem der Ansprüche 1 bis 3, dadurch gekennzeichnet, daß ein oder mehrere elastisches Gewebe, Gewirke oder Gestricke (6) enthalten sind.

5. Schnittfester Verbund nach mindestens einem der Ansprüche 1 bis 4, dadurch gekennzeichnet, daß sämtliche im Verbund enthaltene Polyeststerfasern flammhemmend modifiziert sind.

6. Schnittfester Verbund nach mindestens einem der Ansprüche 1 bis 5, dadurch gekennzeichnet, daß der Verbund einen 2 bis 6 lagigen Aufbau aufweist.

7. Schnittfester Verbund nach mindestens einem der Ansprüche 1 bis 6, dadurch gekennzeichnet, daß mindestens 2 Lagen vorhanden sind und mindestens eine Vliesschicht (5), vorzugsweise Stapelfaservliesschicht vorhanden ist und zumindest zwei übereinanderliegende Lagen miteinander vernadelt sind.

8. Schnittfester Verbund nach mindestens einem der Ansprüche 1 bis 7, dadurch gekennzeichnet, daß mindestens 2 Lagen vorhanden sind und zumindest zwei übereinanderliegende Lagen miteinander verklebt sind .

9. Schnittfester Verbund nach mindestens einem der Ansprüche 1 bis 8, dadurch gekennzeichnet, daß alle zur Herstellung verwendeten Komponenten, wie Fasern, sowie ggf. vorhandene Kleber und Füllstoffe, zu mindestens 95 Gew.-%, bezogen auf das Gesamtgewicht des Verbundes, aus flammhemmend modifiziertem Polyester bestehen.

10. Schnittfester Verbund nach mindestens einem der Ansprüche 1 bis 9, dadurch gekennzeichnet, daß sämtliche im Verbund enthaltenen Polyesterfasern aus Polyethylenterephthalat bestehen.

11. Schnittfester Verbund nach mindestens einem der Ansprüche 1 bis 10, dadurch gekennzeichnet, daß sämtliche im Verbund enthaltenen Polyesterfasern aus flammhemmend modifiziertem Polyethylenterephthalat bestehen.

12. Polsterungsmaterial, dadurch gekennzeichnet, daß es eine Dekorschicht (2) aufweist, die mit dem Verbund gemäß Anspruch 1 verbunden ist.

13. Verfahren zur Herstellung eines Posterungsmaterials, dadurch gekennzeichnet, daß auf einen Verbund gemäß Anspruch 1 eine Dekorschicht (2) aufgebracht wird.
